# EUROPÄISCHE PATENTANMELDUNG

(11) **EP 0 951 953 A1**
(43) Veröffentlichungstag der Anmeldung: **27.10.1999**
(21) Anmeldenummer: 98107413.1
(22) Anmeldetag: 23.04.1998
(51) Int. Cl.: B09B 3/00, B08B 15/04

(54) **Verfahren und Vorrichtung zum Abtragen von kontaminierten Oberflächenschichten**

(71) Anmelder: Clavey, Lothar, 38116 Braunschweig (DE)
(72) Erfinder: Clavey, Lothar, 38116 Braunschweig (DE)
(74) Vertreter: Lins, Edgar, Dipl.-Phys. Dr.jur.

(57) **Zusammenfassung**

Das Abtragen von kontaminierten Oberflächenschichten, insbesondere Spritzasbestschichten, von Gebäudewänden, insbesondere Innenwänden, und das Sammeln und dichte Verpacken des abgetragenen kontaminierten Materials, wird wesentlich dadurch vereinfacht, daß die Oberflächenschicht mechanisch mit einem in einem einseitig offenen Gehäuse (20) angeordneten Werkzeugkopf (4) abgetragen wird,
das abgetragene Material zusammen mit am Werkzeugkopf (4) angesaugter Luft durch das Gehäuse (20) und eine angeschlossene Schlauchleitung (5) in einen Sammelsilo (6) abgesaugt wird, das abgetragene Material im Sammelsilo (6) mittels einer Filteranordnung (7) von dem dem Saugluftstrom getrennt und über einen Bodenauslaß (13) in einen abgedichtet an den Bodenauslaß (13) angeschlossenen Verpackungsbehälter (29) entleert wird und
die Absaugluft aus dem Sammelsilo (6) von dem abgetragenen Material und Kontaminationen befreit zu einer Ansaugquelle (11) gelangt und abgeblasen wird.

Die Belastung der im kontaminierten Bereich arbeitenden Personen wird dadurch erheblich vermindert.

## Beschreibung

Die Erfindung betrifft ein Verfahren zum Abtragen von kontaminierten Oberflächenschichten, insbesondere Spritzasbestschichten, von Gebäudewänden, insbesondere Innenwänden, und zum Sammeln und dichten Verpacken des abgetragenen kontaminierten Materials.

Die Erfindung betrifft ferner eine zur Durchführung des Verfahrens geeignete Vorrichtung.

Die Entsorgung von kontaminierten Oberflächenschichten ist insbesondere für die Sanierung von asbesthaltigen Gebäuden von Bedeutung. Bekanntlich können Asbestfasern krebserregend sein, so daß das Einatmen von Asbestfasern unbedingt vermieden werden muß. Aus diesem Grund werden zunehmend die früher aus Gründen der Flammenhemmung verwendeten asbesthaltigen Oberflächenschichten abgetragen und das asbesthaltige Material kontrolliert entsorgt.

Es ist bekannt, das asbesthaltige Oberflächenmaterial von den Wänden durch Wasserhöchstdrucktechnik bzw. durch Abkratzen mit einem Spachtel abzutragen, vom Fußboden aufzusammeln und in große, dichte Säcke zu verpacken. Selbstverständlich muß dabei das Abtragen der kontaminierten Materialschichten unter Einhaltung hoher Sicherheitsbedingungen erfolgen. Der kontaminierte Raum wird hierzu abgedichtet und gegenüber der Atmosphäre unter einen leichten Unterdruck versetzt, um eine etwaige Luftströmung nur von außen nach innen zu ermöglichen, also den Austritt von Kontaminationen, hier Asbestfasern, von innen nach außen zu verhindern. Der kontaminierte Bereich wird als "Schwarzbereich" definiert. In dem Schwarzbereich arbeitende Personen müssen selbstverständlich mit Atemschutz ausgerüstet sein und nach dem Verlassen des Schwarzbereichs von anhaftenden Kontaminationen gesäubert werden.

Das bekannte Verfahren erfordert somit einen erheblichen Aufwand und erfordert viele Verfahrensschritte, die von Personen im Schwarzbereich ausgeführt werden müssen.

Der Erfindung liegt demgegenüber die Aufgabe zugrunde, das Abtragen von kontaminierten Oberflächenschichten zu vereinfachen und dadurch die Gefährdung für im kontaminierten Bereich arbeitende Personen zumindest zu verringern.

Erfindungsgemäß wird diese Aufgabe bei einem Verfahren der eingangs erwähnten Art dadurch gelöst, daß die Oberflächenschicht mechanisch mit einem in einem einseitig offenen Gehäuse angeordneten Werkzeugkopf abgetragen wird, das abgetragene Material zusammen mit am Werkzeugkopf angesaugter Luft durch das Gehäuse und eine angeschlossene Schlauchleitung in einen Sammelsilo abgesaugt wird, das abgetragene Material im Sammelsilo mittels einer Filteranordnung von dem dem Saugluftstrom getrennt und über einen Bodenauslaß in einen abgedichtet an den Bodenauslaß angeschlossenen Verpackungsbehälter entleert wird und die Absaugluft aus dem Sammelsilo von dem abgetragenen Material und Kontaminationen befreit zu einer Ansaugquelle gelangt und abgeblasen wird.

Durch das erfindungsgemäße Verfahren wird das Abtragen des kontaminierten Materials und das Verpacken zum Zwecke der Entsorgung praktisch in einem einzigen Arbeitsgang vorgenommen. Das abgetragene Material wird sofort beim Abtragen abgesaugt und in dichten Schlauchleitungen zum ebenfalls dichten Sammelsilo abgesaugt, so daß eine etwaige im Schwarzbereich befindliche Person nicht in mehreren Verfahrensgängen mit dem kontaminierten Material in Berührung kommt. Da das kontaminierte Material im Schwarzbereich nicht mehrfach hin- und hertransportiert und aufgewirbelt wird, reduziert sich die Kontaminationsbelastung im Schwarzbereich selbst ganz erheblich. Vorzugsweise wird sich der Werkzeugkopf an einem fahrbaren Hubgerät befinden, so daß eine Bedienung im Schwarzbereich nur für die Steuerung des Werkzeugkopfes entlang der Innenwände, insbesondere auch der Raumdecken, vorzunehmen ist. Dabei befindet sich die das Hubgerät steuernde Person bereits mit einigem Abstand von der Abtragstelle des Werkzeugkopfes, so daß auch aus diesem Grunde eine Verringerung der Kontakte zu kontaminierten Materialien bewirkt wird. Es ist sogar denkbar, das Hubfahrzeug und die Steuerung des Werkzeugkopfes aus einem nicht kontaminierten Bereich (Weißbereich) fernzusteuern, so daß während des Abtragens der kontaminierten Oberflächenschicht überhaupt keine Person mehr im Schwarzbereich vorhanden sein muß.

Das erfindungsgemäße Verfahren erlaubt die Unterbringung des Sammelsilos bereits im Weißbereich, so daß die Kontaminationsarbeiten an der Außenseite von Geräten und Behältern, insbesondere auch der Verpackungsbehälter für die kontaminierten Materialien vermieden bzw. stark reduziert werden können. Wird der Sammelsilo im Weißbereich angeordnet und das Abpacken in die Verpackungsbehälter somit im Weißbereich durchgeführt, entfällt jegliche Dekontamination der Außenseite des Sammelsilos und der Verpackungsbehälter, die vorzugsweise Säcke (Big Bags) sind.

Um in dem erfindungsgemäßen Konzept der Verlagerung möglichst vieler Teile der Entsorgungsanlage in den Weißbereich eine leichte Handhabung zu ermöglichen, werden vom Schwarzbereich in den Weißbereich und umgekehrt führende Schlauchleitungen durch Schlauchkupplungen trennbar und an der Trennstelle vor der Trennung beidseitig verschließbar ausgebildet. Die Öffnung der Schlauchkupplungen erfolgt dann erst, wenn die Schlauchleitung beidseitig von der Trennstelle verschlossen worden ist. Dadurch wird vermieden, daß aus dem kontaminierten Innern der Schlauchleitung Kontaminationen in den Weißbereich austreten können.

Der Sammelsilo wird zweckmäßigerweise nach dem Trennen der Schlauchleitung hermetisch verschlossen und vorzugsweise versiegelt. In diesem Zustand kann er beispielsweise zum Wechsel der Filteranordnung in eine spezielle Einrichtung, einen speziell eingerichteten Schwarzbereich, verbracht werden, wo der Austausch der Filteranordnung fachgerecht durchgeführt werden kann. Sofern ein derartiger Transport als bedenklich angesehen wird, kann erfindungsgemäß der Bereich, in dem das abgetragene Material zurückgehalten wird, ohne Öffnung des Sammelsilos mit einer Spülflüssigkeit gespült werden, die in dem abgedichtet angeschlossenen Verpackungsbehälter gesammelt wird. Dadurch ist der Sammelsilo am Ende eines Verpackungsvorgangs dekontaminierbar.

Vor dem Abnehmen des Verpackungsbehälters wird der Bodenauslaß des Sammelsilos vorzugsweise hermetisch verschlossen, wobei auch der vorzugsweise mit einer Materialschleuse ausgebildete Verschlußmechanismus mit einer Spülflüssigkeit vor dem Verschließen gespült werden kann. Die Steuerungen der Verschlüsse der Schlauchleitungen und des Bodenauslasses des Sammelsilos werden vorzugsweise ferngesteuert, insbesondere pneumatisch gesteuert, vorgenommen, wobei die Steuerung so ausgebildet sein kann, daß das Trennen der Schlauchleitung bzw. das Abnehmen des Verpackungsbehälters erst möglich ist, wenn die entsprechenden Verschlußvorgänge abgeschlossen sind.

Zur Unterstützung der Entleerung des Sammelsilos kann dieses ferner mit einer Kopfvorrichtung zum Lösen anhaftender Materialansammlungen und insbesondere mit einer Ausblasvorrichtung versehen sein, mit der die Filteranordnung des Sammelsilos im Gegenstrom zum Saugluftstrom ausblasbar ist, so daß die Auswechselintervalle für die Filteranordnung erheblich verlängert werden können.

Die oben erwähnte Aufgabe wird ferner mit einer zur Durchführung des Verfahrens geeigneten Vorrichtung gelöst durch einen in einem einseitig offenen Gehäuse angeordneten Werkzeugkopf, der entlang einer Gebäudewand verfahrbar gelagert ist,
ein Absauggerät, das mit dem Gehäuse des Werkzeugkopfes über Schlauchleitungen verbunden ist,
einen in die Schlauchleitung eingesetzten Sammelsilo mit einer Filteranordnung zum Rückhalten des abgetragenen Materials und der darin enthaltenen Kontaminationen und
einem Bodenauslaß des Sammelsilos zum Anschluß eines dicht verschließbaren Verpackungsbehälters für das kontaminierte Material.

Die Erfindung soll im folgenden anhand von in der Zeichnung dargestellten Ausführungsbeispielen näher erläutert werden. Es zeigen:
- Figur 1 -: eine schematische Darstellung einer erfindungsgemäßen Anordnung zum Abtragen und Verpacken von abgetragenen kontaminierten Materialien mit einer Unterteilung von Funktionen im Schwarzbereich und im Weißbereich
- Figur 2 -: eine schematische Darstellung eines mobilen Hubgeräts mit einem Werkzeugkopf zum Abtragen einer kontaminierten Oberflächenschicht
- Figur 3 -: eine schematische Darstellung des in Figur 2 angedeuteten Werkzeugkopfes
- Figur 4 -: eine schematische Darstellung einer Schlauchkupplung mit einer Schleusenanordnung
- Figur 5 -: eine schematische Darstellung eines Bodenauslasses des Sammelsilos aus Figur 1.

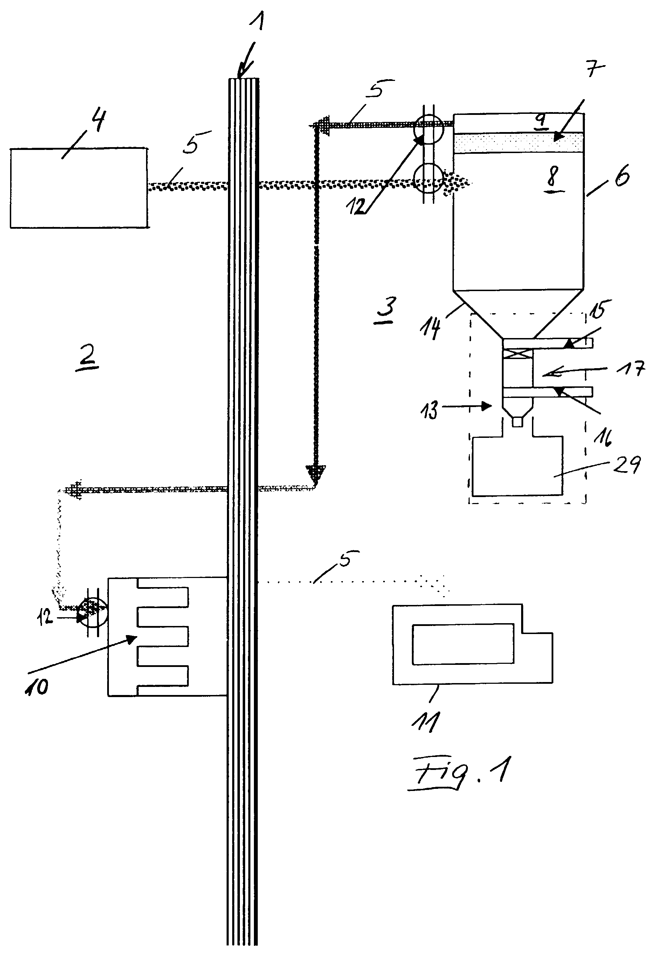

Figur 1 zeigt eine Wand 1, durch die ein Schwarzbereich 2 (kontaminierter Bereich) von einem Weißbereich 3 (nicht kontaminierter Bereich) getrennt wird.

Ein Werkzeugkopf 4 ist in Figur 1 nicht näher dargestellt und nur als Kasten angedeutet. Er befindet sich im Schwarzbereich und dient zum Abtragen einer kontaminierten Oberflächenschicht einer Gebäudewand. Vom Werkzeugkopf 4 aus führt eine Schlauchleitung 5 kontaminiertes, abgetragenes Material durch die Wand 1 in einen im Weißbereich 3 aufgestellten Sammelsilo 6. Der Sammelsilo 6 ist durch eine Filteranordnung 7, die sich oberhalb der Anschlußstelle für die Schlauchleitung 5 befindet, in einen Schwarzbereich 8 und einen Weißbereich 9 unterteilt. Die Filteranordnung, die vorzugsweise als für derartige Zwecke geeignetes und abgenommenes Taschenfilter ausgebildet ist, hält das abgetragene Material zurück, das durch einen Saugluftstrom durch Schlauchleitung 5 angesaugt worden ist. Der Saugluftstrom erstreckt sich durch die Filteranordnung 7 in den Weißbereich 9 und führt von dort über eine Fortsetzung der Schlauchleitung 5 zu einem Feinfilter 10, der im dargestellten Ausführungsbeispiel aus Entsorgungsgründen im Schwarzbereich aufgestellt ist, aber auch im Weißbereich angeordnet sein könnte. Vom Feinfilter 10 setzt sich die Schlauchleitung 5 zu einem mobilden Sauggerät 11 fort, das die nunmehr vollständig gereinigte Luft zur Ausbildung des Saugluftstromes ansaugt und auf der Druckseite ins Freie abläst. Gegebenenfalls kann die gereinigte Luft auch in den Schwarzbereich zurückgeführt werden.

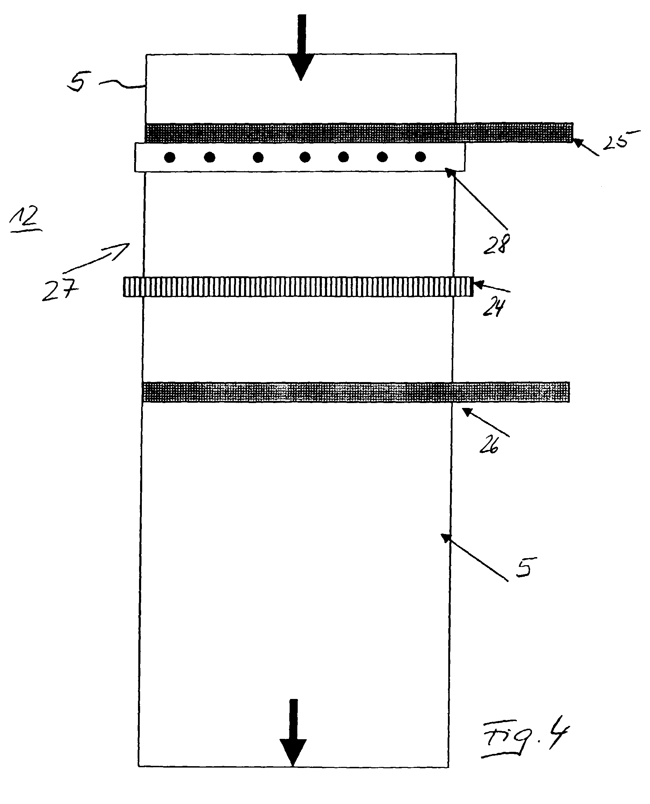

Figur 1 läßt erkennen, daß die vom Werkzeugkopf 4 zum Sammelsilo führende Schlauchleitung 5 an den Sammelsilo 6 mit einer Schlauchkupplung 12 angeschlossen ist und daß sich eine entsprechende Schlauchkupplung 12 auch am Ausgang im Weißbereich 9 des Sammelsilos 6 befindet. Ferner ist eine Schlauchkupplung 12 am Eingang des Feinfilters 10 vorgesehen. Der Aufbau der Schlauchkupplungen 12 wird unten anhand der Figur 4 näher erläutert.

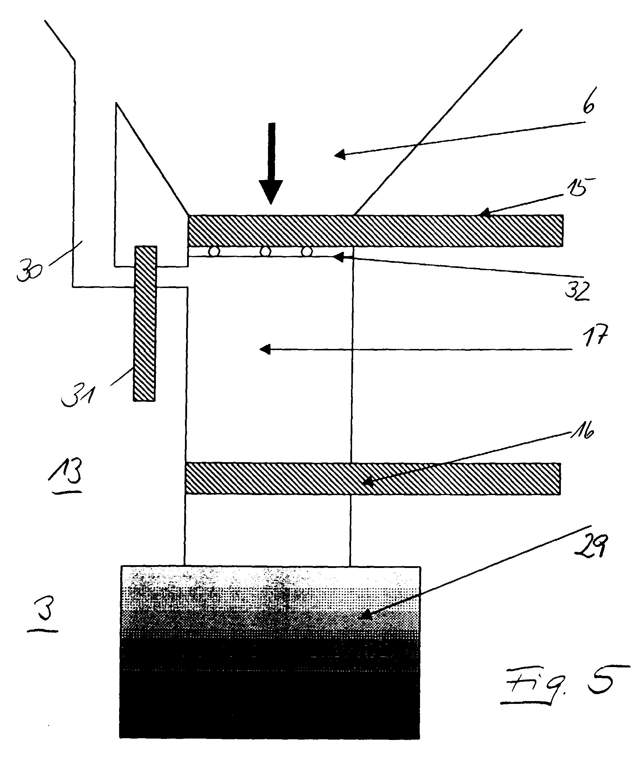

Der Sammelsilo 6 weist einen Bodenauslaß 13 auf, der sich an eine trichterförmige Verjüngung 14 des Sammelsilos 6 anschließt. Innerhalb des Bodenauslasses 13 befinden sich zwei Schieber 15, 16, die gemeinsam eine Schleusenanordnung 17 bilden, die im einzelnen anhand der Figur 5 näher erläutert werden wird.

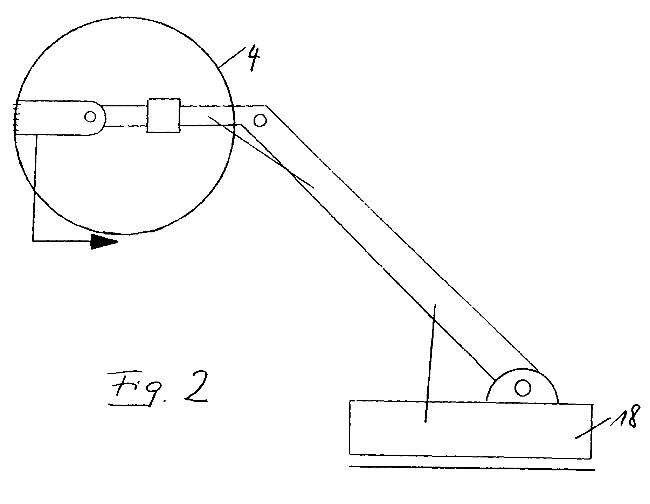

Figur 2 zeigt, daß der Werkzeugkopf 4 von einem mobilen Hubgerät 18 getragen wird, so daß der Werkzeugkopf 4 entlang von vertikalen oder horizontalen Innenwänden eines Gebäudes im Schwarzbereich 2 zum Zwecke des Abtragens einer kontaminierten Oberflächenschicht verfahrbar ist.

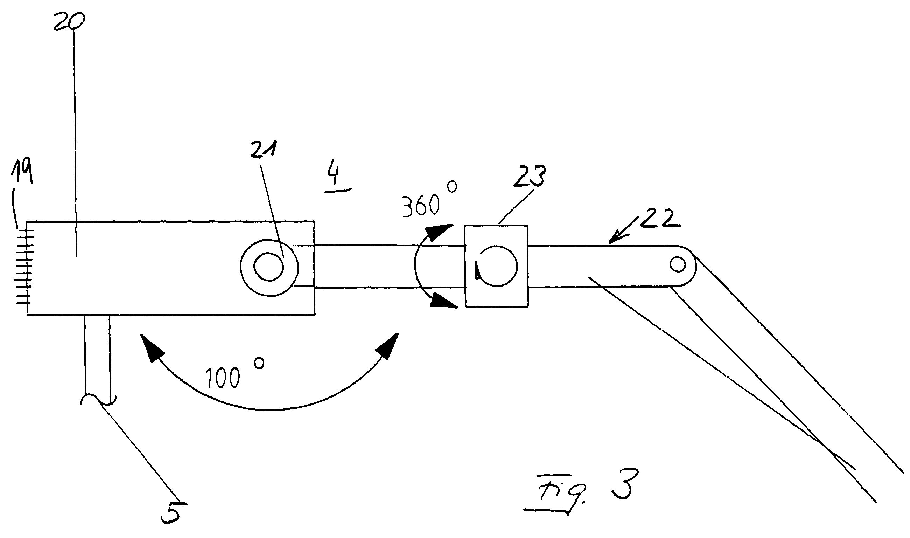

Figur 3 verdeutlicht, daß der Werkzeugkopf 4 mit einer rotierenden Werkzeugwelle 19 ausgestattet ist, die beispielsweise als eine rotierende Drahtbürste ausgebildet sein kann, mit der Spritzasbestschichten entfernbar sind. Die Werkzeugwelle ragt etwas aus einem einseitig offenen Gehäuse 20 des Werkzeugkopfes 4 heraus. An das nur einseitig offene Gehäuse 20 ist die Schlauchleitung 5 angeschlossen, durch die das von der Werkzeugwelle 19 abgetragene Material zum Sammelsilo 6 abgesaugt wird.

Das Gehäuse 20 ist mittels eines hydraulisch betätigbaren Drehgelenks 21 an einem Verfahrgestänge 22 des Hubgeräts 18 angelenkt. Das Verfahrgestänge 22 weist ferner einen hydraulischen Drehmotor 23 auf, mit dem der Werkzeugkopf um eine vertikale Achse um 360° drehbar ist.

Das Drehgelenk 21 erlaubt eine Verstellung um beispielsweise 100°, so daß sowohl vertikale Innenwände als auch Deckenwände zum Zwecke der Entfernung von kontaminierten Oberflächenschichten bearbeitet werden können.

Figur 4 zeigt ein Detail einer Schlauchkupplung 12, in der die beiden Enden der Schlauchleitung 5 durch eine Kupplungseinrichtung 24 miteinander verbindbar bzw. voneinander trennbar sind. Beiderseits der Kupplungseinrichtung 24 befindet sich jeweils ein pneumatisch gesteuerter Schieber 25, 26, die gemeinsam eine Schleusenanordnung 27 bilden. Die Schleusenanordnung 27 kann so ausgebildet sein, daß die Trennung der Enden der Schlauchleitung 5 durch die Kupplungseinrichtung 24 erst dann möglich ist, wenn beide Schieber 25, 26 die Schlauchleitung 5 beiderseits der Kupplungseinrichtung 24 verschlossen haben.

Vor dem Verschließen der Schlauchleitung 5 durch die Schieber 25, 26 wird die Schleusenanordnung 27 mit einer als Luftringdüse ausgebildeten Düsenanordnung 28 mit Druckluft ausgeblasen, um auch etwaige Restkontaminationen in der Schlauchleitung 5 zwischen den beiden Schiebern 25, 26 vor dem Öffnen der Kupplungseinrichtung 24 aus dem Schleuenbereich 27 zu entfernen.

Die in Figur 4 dargestellten Pfeile zeigen die Saugrichtung für die Absaugung des abgetragenen Materials in der Schlauchleitung 5 an.

Figur 5 verdeutlicht schematisch den Aufbau des Bodenauslasses 13, an dem abgedichtet ein vorzugsweise als Big Bag ausgebildeter Verpackungsbehälter 29 zur Aufnahme des kontaminierten abgetragenen Materials angeschlossen ist.

Zum Überführen von im Sammelsilo 6 angesammelten Material in den Verpackungsbehälter 29 wird der obere Schieber 15 geöffnet und der untere Schieber 16 geschlossen gehalten, so daß Material in die Schleusenanordnung 17 hineinfällt. Nach dem Schließen des oberen Schiebers 15 wird der untere Schieber 16 geöffnet, so daß das Material aus der Schleusenanordnung 17 in den Verpackungsbehälter 29 fallen kann. Zwischen dem Innenraum des Sammelsilos 6 unterhalb der Filteranordnung 7 und dem Innern der Schleusenanordnung 17 ist eine kleine Bypass-Entlüftungsleitung 30 vorgesehen, die durch einen weiteren Schieber 31 verschließbar ist. Der weitere Schieber 31 wird zusammen mit dem oberen Schieber 15 der Schleusenanordnung 17 geöffnet, um ein Hineinfallen des gesammelten Materials in die Schleusenanordnung 17 auch während des noch eingeschalteten Saugluftstroms zu unterstützen. Die Bypass-Entlüftungsleitung 30 sorgt dafür, daß sich unterhalb etwaiger über dem oberen Schieber 16 ausbildenden Materialbrücken kein höherer Druck vorhanden ist als auf der Saugseite der Materialbrücke. Eine derartige Druckdifferenz würde das Herabfallen des Materials in die Schleusenanordnung 17 verhindern. Durch den Druckausgleich mit Hilfe der Bypass-Entlüftungsleitung 30 wird eine derartige Druckdifferenz verhindert, so daß das Material in die Schleusenanordnung 17 fällt und durch Schließen des oberen Schiebers 15 und des weiteren Schiebers 31 und Öffnen des unteren Schiebers 16 in den Verpackungsbehälter 29 gelangen kann.

Die Befüllung des Verpackungsbehälters 29 geschieht durch häufiges Wiederholen des beschriebenen Entleerungsvorganges durch die Schleusenanordnung 17 hindurch. Ist der Verpackungsbehälter 29 praktisch gefüllt, wird die Abnahme des Verpackungsbehälters 29 vom Bodenauslaß 13 vorbereitet. Hierzu ist unmittelbar unterhalb des oberen Schiebers 15 eine Wasserringdüse 32 vorgesehen, mit der die Innenwände des Bodenauslasses 13 abgespült werden können, um etwaige Asbestfaseranhaftungen zu entfernen. Nach dem Verschließen des unteren Schiebers 16 kann dann der Verpackungsbehälter 29 von dem Bodenauslaß 13 abgenommen werden, ohne daß eine ernsthafte Gefahr besteht, daß eine gefährliche Menge von Asbestfasern in den Weißbereich 3 freigesetzt wird.

Eine ähnliche Spülvorrichtung mit einer der Wasserringdüse 32 ähnlichen Düsenanordnung kann unmittelbar unterhalb der Filteranordnung 7 des Sammelsilos 6 vorgesehen sein, um dessen Innenwände ebenfalls mit einer Spülflüssigkeit reinigen zu können.

## Patentansprüche

1. Verfahren zum Abtragen von kontaminierten Oberflächenschichten, insbesondere Spritzasbestschichten, von Gebäudewänden, insbesondere Innenwänden, und zum Sammeln und dichten Verpacken des abgetragenen kontaminierten Materials, **dadurch gekennzeichnet, daß** die Oberflächenschicht mechanisch mit einem in einem einseitig offenen Gehäuse (20) angeordneten Werkzeugkopf (4) abgetragen wird,
das abgetragene Material zusammen mit am Werkzeugkopf (4) angesaugter Luft durch das Gehäuse (20) und eine angeschlossene Schlauchleitung (5) in einen Sammelsilo (6) abgesaugt wird,
das abgetragene Material im Sammelsilo (6) mittels einer Filteranordnung (7) von dem dem Saugluftstrom getrennt und über einen Bodenauslaß (13) in einen abgedichtet an den Bodenauslaß (13) angeschlossenen Verpackungsbehälter (29) entleert wird
und die Absaugluft aus dem Sammelsilo (6) von dem abgetragenen Material und Kontaminationen befreit zu einer Ansaugquelle (11) gelangt und abgeblasen wird.

2. Verfahren nach Anspruch 1, bei dem das Abtragen der Oberflächenschichten einem abgedichteten und gegenüber der Atmosphäre unter einen leichten Unterdruck versetzten Raum (Schwarzbereich 2) erfolgt, dadurch gekennzeichnet, daß die an den Werkzeugkopf (4) angeschlossene Schlauchleitung (5) aus dem Schwarzbereich (2) in einen nicht kontaminierten Bereich (Weißbereich 3) zum Sammelsilo (6) geführt wird.

3. Verfahren nach Anspruch 2, dadurch gekennzeichnet, daß vom Schwarzbereich (2) in den Weißbereich (3) und umgekehrt führende Schlauchleitungen (5) durch Schlauchkupplungen (12) trennbar und an der Trennstelle (24) vor der Trennung beidseitig verschließbar ausgebildet werden und daß die Schlauchkupplungen 12 erst geöffnet werden, wenn die Schlauchleitung (5) beidseitig von der Trennstelle (24) verschlossen worden ist.

4. Verfahren nach Anspruch 2 oder 3, dadurch gekennzeichnet, daß der Sammelsilo (6) nach dem Trennen der Schlauchleitung (5) hermetisch verschlossen und zum Wechsel der Filteranordnung (7) in eine spezielle Einrichtung verbracht wird.

5. Verfahren nach einem der Ansprüche 1 bis 4, dadurch gekennzeichnet, daß der Bereich (8) des Sammelsilos (6), in dem das abgetragene Material zurückgehalten wird, ohne Öffnung des Sammelsilos mit einer Spülflüssigkeit gespült wird und die Spülflüssigkeit in dem abgedichtet angeschlossenen Verpackungsbehälter (29) gesammelt wird.

6. Verfahren nach einem der Ansprüche 1 bis 5, dadurch gekennzeichnet, daß die Steuerungen von Verschlüssen (15, 16; 25, 26) der Schlauchleitungen (5) und/oder des Bodenauslasses (13) des Sammelsilos (6) ferngesteuert vorgenommen werden.

7. Verfahren nach einem der Ansprüche 1 bis 6, dadurch gekennzeichnet, daß der Werkzeugkopf (4) aus einem nicht kontaminierten Bereich (Weißbereich 3) ferngesteuert wird.

8. Vorrichtung, geeignet zur Durchführung des Verfahrens nach einem der Ansprüche 1 bis 7, **gekennzeichnet durch** einen in einem einseitig offenen Gehäuse (20) angeordneten Werkzeugkopf (4), der entlang einer Gebäudewand verfahrbar gelagert ist,
ein Absauggerät (11), das mit dem Gehäuse (20) des Werkzeugkopfes (4) über eine Schlauchleitung (5) verbunden ist, einen in die Schlauchleitung (5) eingesetzten Sammelsilo (6) mit einer Filteranordnung (7) zum Rückhalten des abgetragenen Materials und der darin enthaltenen Kontamination und
einen Bodenauslaß (13) zum Anschluß eines dicht verschließbaren Verpackungsbehälters (29) für das kontaminierte Material.

9. Vorrichtung nach Anspruch 8, dadurch gekennzeichnet, daß alle Schlauchanschlüsse des Sammelsilos (6) mit einer beidseitig an der Trennstelle (24) abschließbaren Schleusenanordnung (27) versehen sind.

10. Vorrichtung nach Anspruch 9, gekennzeichnet durch eine Düsenanordnung (28) zum Spülen des Zwischenraums der Schleusenanordnung (27) mit einem Spülfluid.

11. Vorrichtung nach einem der Ansprüche 8 bis 11, dadurch gekennzeichnet, daß der Bodenauslaß (13) mit einer beidseitig verschließbaren Materialschleusenanordnung (17) ausgestattet ist.

12. Vorrichtung nach Anspruch 11, gekennzeichnet durch eine mit einem Spülflüssigkeitsanschluß verbundene Düsenanordnung (32), die auf die Innenwand des Bodenauslasses unterhalb eines oberen Verschlusses (15) der Schleusenanordnung (17) gerichtet ist.

13. Vorrichtung nach einem der Ansprüche 8 bis 12, gekennzeichnet durch eine mit einem Spülflüssigkeitsanschluß verbundene Düsenanordnung, die auf die Innenwände des Sammelsilos (6) unterhalb der Filteranordnung (7) gerichtet ist.

14. Vorrichtung nach einem der Ansprüche 8 bis 13, gekennzeichnet durch eine mit einer Druckluftquelle verbindbaren Ausblasvorrichtung, die im Gegenstrom zum Saugluftstrom auf die Filteranordnung (7) gerichtet ist.
